# EUROPEAN PATENT SPECIFICATION

(11) **EP 1 921 884 B1**
(45) Date of publication and mention of the grant of the patent: **26.01.2011**
(21) Application number: 08151566.0
(22) Date of filing: 07.12.1998
(51) Int. Cl.: H04W 36/12

(54) **Cell load control method and system**
Verfahren und System zur Regelung der Zelllast
Procédé et système de contrôle de la charge cellulaire

(43) Date of publication of application: 14.05.2008
(62) Divisional of application: 98962419.2
(73) Proprietor: Nokia Corporation, 02150 Espoo (FI)
(72) Inventor: Longoni, Fabio, 02130, Espoo (FI)
(74) Representative: TBK-Patent

(56) References cited:
- WO-A-97/41698
- WO-A-98/48530

## Description

The present invention relates to a method and system for performing cell load control in a mobile radio network using diversity connections between base stations, such as a radio access network of a WCDMA, (wideband code division multiple access, system like the UTMS, universal mobile telecommunications system,.

In a radio access network of a WCDMA system, a soft handover is an essential feature which allows an efficient use of the capacity which can be offered by network. In a soft handover state, one mobile station, MS, is connected using a plurality of radio cells contained in its active set, AS, as a resource. The MS monitors levels of received signals broadcasted from neighboring base stations, compares them to a set of thresholds, and reports the measurement of neighbor cells to a radio network controller, RNC, controlling this specific MS, i.e. a serving RNC, SRNC, and, using this information, the SRNC may transmit a command to the MS to add a new radio cell to its active set, delete a radio cell, replace one or more radio cells, perform an interfrequency handover, and so on. The active set is defined as a set of base stations from which the same user information is sent, simultaneously demodulated and coherently combined.

However, a problem arises when the new or "candidate" cell to be added to the active set is not controlled by the SRNC (such a cell is referred to as "drift cell"), because the load or congestion status of that cell is not available at the SRNC.

Another problem arises when the drift cell is already in the active set, i.e. radio cells which are actively used in the present connection of the MS (inter RCN soft handover).

Also in this case, the load status of the drift cell is not known to the SRNC and cannot be considered when the SRNC decides on the execution of a handover, i.e. a handover for traffic reasons is not possible.

A simple solution to the above problems is that the SRNC ignores the load status of the drift cell, and the load status is not used in the decision to add this drift cell to the respective set of the MS. In contrast thereto, the load status of the cells controlled by the SRNC is available and can be used by a handover algorithm performed in the SRNC. When the SRNC decides to add the drift cell to the active set solely on the basis of the measurement report, it transmits a dedicated message (branch addition request) to the so-called drift RNC, DRNC, controlling the drift cell, wherein the DRNC decides whether to accept or reject the addition of the new cell on the basis of the cell load status (admission control procedure).

However, the load of the drift cell cannot be checked by the SRNC, even if the cell is in the active set of the MS controlled by the SRNC. Thus, a radio resource management, RRM, algorithm such as a handover control algorithm of the SRNC cannot be used in an efficient manner, because the load of the drift cell is not known. This leads to the following specific problems: The SRNC may decide to add the drift cell to the active set even if the load of the cell is high and some other radio cells of less load could have been selected. Accordingly, the SRNC sends a branch addition message to the DRNC which may accept the new cell, wherein the increased load of the accepted radio cell may cause an increased interference such that the distribution of the load in the network is not balanced. Otherwise, the DRNC may refuse the new radio cell (branch), wherein the SRNC decides on the following step in accordance with its control algorithms, which causes a delay due to the external signaling between the SRNC and the DRNC. In a worst case scenario, the SRNC may try a few moments later to add the same radio cell to the active set to another or even the same MS.

The load of a drift cell already included in the active set of the MS may increase. Since the drift cell is not controlled by the SRNC, the SRNC is not aware of the load increase, which may lead to an unbalanced network. Moreover, the load of the cell may increase to such an extent that the cell reaches a congestion state, and the branch is lost or deleted by the DRNC. Thereby, the quality of the connection may decrease.

The SRNC may request to add a drift cell which is not available due to a congestion status or a hardware failure to the active set of the controlled MS. Again, this might lead to a decrease in the quality of the connection.

WO 97/41698 discloses a method and apparatus for performing an inter-system soft handoff. When a subscriber unit crosses from a first cellular system to a second cellular system, a base station controller determines if sufficient network resources are available to conduct an inter-system soft handoff and, if so, generates a set of signaling messages that cause a call processing resource to be allocated. The determination as to whether sufficient network resources are available to conduct the inter-system soft handoff is based on the type of connection, the number of inter-system calls, and the frame offset of the call currently being processed.

WO 98/48530 relates to a method and system for dynamically increasing the capacity of a code division multiple access radio telecommunications network. When the radio telecommunications network receives a request for access to the radio telecommunications network from an entering mobile station, a load capacity monitor determines if the radio telecommunications network is fully loaded. If so, a network load processor releases one of a duplicate channel element used in the CDMA radio telecommunications network by one of the operating mobile stations.

It is an object of the present invention to provide a method and radio access network controller as defined in the claims.

Accordingly, a radio network controller can receive or send information on a load status or condition of e.g. a drift cell controlled by the radio network controller, and can use its radio resource algorithms in a more effective way.

A decision on the load status of the radio cell can be used for deciding on an admission of the radio cell for handover of a mobile terminal controlled by the second radio network controller. Thus, the radio network controller may refer to the received load information, in case an admission decision concerning a drift cell has to be made. The admission control is then able to check whether the drift cell has sufficient resources to accept a new branch.

Thereby, the system capacity can be used more efficiently and the active set management and thus the overall quality of the connections are improved.

Advantages achieved by an embodiment of the present invention can be high in particular in case of small controlling areas of the radio network controller, or in case the SRNC relocation is never triggered (anchor RNC concept) or rarely triggered.

Moreover, a high advantage can be achieved, if the radio network is planned in such a way that radio cells controlled by different radio network controllers are mixed together in the same area, which may be the case when an operator decides to expand the network using equipment from another vendor, i.e. multivendor scenario without an open Iub interface.

The load information may be transmitted in response to a load request issued by another radio network controller. Thus, the another radio network controller may issue a load request, in case a drift cell is included in the active set of a controlled MS. Thereby, the signaling load due to the transmission of the load information can be restricted to those cases where the load information is actually required by the SRNC.

Furthermore, the load information can be transmitted when a load level of the radio cell has reached a predetermined load threshold. Thereby, an addition of a congested cell to the active set of the MS can be prevented, since the SRNC is informed by the transmitted load information. In this case, the radio network controller may command a controlled MS to replace or delete a branch to the congested radio cell, in response to the load information.

Thus, the loss of a branch due to the use of a congested radio cell can be prevented.

Furthermore, the radio network controller may issue the load request on the basis of a measurement of neighbor cells reported by the mobile terminal. Thus, the radio network controller may issue the load request only for potential candidate cells to be added to the active set of the mobile terminal.

Moreover, the load request may be issued when the radio cell is included in an active set or a candidate set of the mobile terminal, wherein the active set or the candidate set is used for determining radio cells for the handover of the mobile terminal.

Additionally, the load request may be issued when the mobile terminal has transmitted a request to the radio network controller to add the radio cell to the active set.

Thereby, the radio network controller may check the received load information before deciding on the admission of the drift cell.

A periodical load information may be requested by the load request. By means of the periodical load report, the radio network controller may monitor the load status of a drift cell included in the active set of the mobile terminal, such that the signaling load due to continued load requests can be reduced.

The load information may include a transmission power level and a received interference level of the radio cell. Accordingly, the radio network controller may compare the receive transmission power level and interference level with a maximum transmission power level and a maximum reception interference level to thereby evaluate the load status of the drift cell.

Another radio network controller may comprise a determination means for determining a load level of the radio cell and for generating the load information. The determination means may control the transmitting means so as to transmit the load information, when the load level of the radio cell has reached the predetermined load threshold.

Furthermore, the another radio network controller may comprise a receiving means for receiving a load request trans mitted by a transmitting means of the radio network controller, wherein the determination means is arranged to control the transmitting means of the radio network controller to transmit the controlled information, when the load request has been received by the receiving means.

Furthermore, the determination means may be arranged to periodically determine the load information and to control the transmitting means of the radio network controller to periodically transmit the load information.

The determination means may be arranged to determine the load information on the basis of a load parameter received by the radio network controller from a base station of the radio cell.

As an alternative, the load status can be used for deciding on an amount of capacity which can be allocated to a user.

As a further alternative, the load status can be used for deciding when to order a mobile terminal to switch to a dedicated channel state. In this case, the mobile terminal may be ordered to switch to said dedicated channel, when the load status indicates an overload of a common channel.

### BRIEF DESCRIPTION OF THE DRAWINGS

In the following, the present invention will be described in greater detail on the basis of embodiments with reference to the accompanying drawings, in which:
Fig. 1 shows a principle block diagram of a radio access network of the UMTS, in which an embodiment of the present invention may be implemented,
Fig. 2 shows a principle block diagram of a radio access network in which two adjacent radio cells are served by a cell load control system according to the embodiment of the present invention, and
Fig. 3 shows a flow diagram of cell load control procedure according to the embodiment of the present invention.

### DESCRIPTION OF EMBODIMENTS

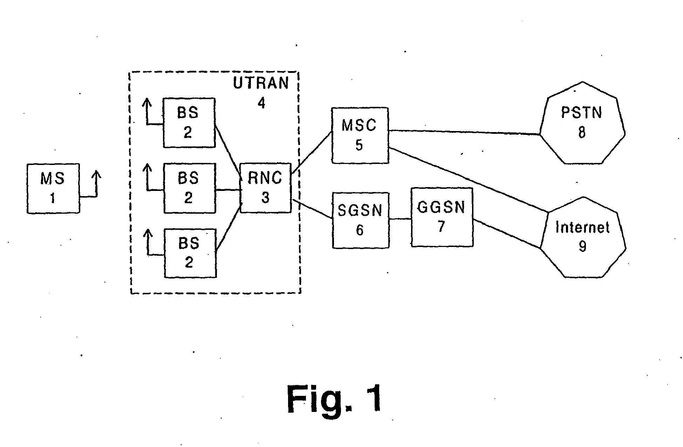

In the following, an embodiment of the method and system according to the present invention will be described on the basis of a radio access system of the UMTS, as shown in Fig. 1.

According to Fig. 1, a UTRAN 4 is connected to a GPRS-based core network and to a GSM-based core network. Furthermore, a mobile station (MS) 1 is radio-connected to at least one base station (BS) 2 which is connected to a radio network controller (RNC) 3 of the UTRAN 4. In WCDMA-based systems, the MS 1 can be connected to several BS 2 simultaneously due to macrodiversity.

The RNC 3 is connected to a mobile switching center (MSC) 5 of the UNTS which provides access to a circuit switched network such as a public switched telephone network (PSTN) 8 or to a packet-switched network such as the Internet 9.

Additionally, the RNC 3 is connected to a Serving GPRS Support Node (SGSN) 6 of the UMTS. The SGSN 6 is connected to a Gateway GPRS Support Node (GGSN) 7 which provides access to the Internet 9.

The RNC 3 performs radio network control functions such as a connection establishment and release, handover, power control and radio resource handling functions. Diversity combining devices used at soft handover and a code function are also located in the RNC 3.

The RNC 3 may be built on a generic ATM switch, wherein all devices and a processor are connected to the ATM switch. In the present case, several BS 2 are connected to the RNC 3.

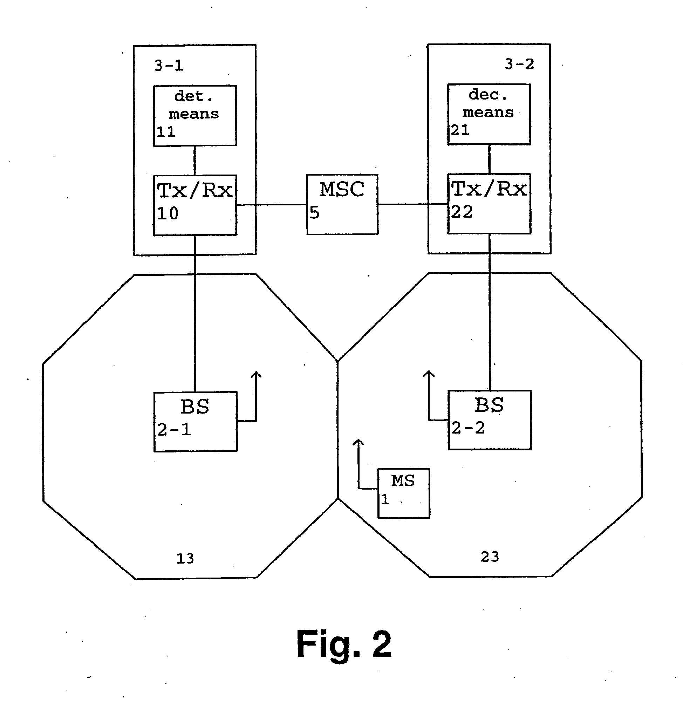

Fig. 2 shows a principle block diagram comprising a first RNC 3-1 and a second RNC 3-2, which serve adjacent radio cells 13 and 23, respectively. The first RNC 3-1 is connected via the MSC 5 to the second RNC 3-2, wherein the second RNC 3-2 serves the corresponding radio cell 23 via a base station (BS) 2-2. Furthermore, the first RNC 3-1 serves the corresponding radio cell 13 via another BS 2-1.

It is noted that the first and second RNC 3-1, 3-2 are also connected to other BSs (not shown) so as to serve a plurality of respective radio cells.

In the case shown in Fig. 2, a mobile station (MS) 1 is located in the radio cell 23 controlled by the BS 2-2 connected to the second RNC 3-2. Thus, the MS 1 is located in the service area of the second RNC 3-2, such that the second RNC 3-2 is the SRNC of the MS 1.

According to the embodiment, the second RNC 3-2 comprises a transceiver 22 for transmitting a request to the first RNC 3-1 to transmit a load information of the radio cell 13 controlled by the first RNC 3-1. Transmissions between the first RNC 3-1 and the second RNC 3-2 are performed via the MSC 5.

In particular, the second RNC 3-2 may request to transmit the load information only once, or to transmit a periodical report, i. e. the load information is transmitted every predetermined number of seconds. Moreover, the load information can be transmitted, when the first RNC 3-1 determines a considerable change of the load of the controlled radio cell 13, e. g. when a critical threshold is reached.

Furthermore, the second RNC 3-2 may request the load information in case the MS 1 has the radio cell 13, which is controlled by the first RNC 3-1, in its active or candidate set used for a soft handover, or simply because the radio cell 13 controlled by the first RNC 3-1 is a neighbor to the serving area of the second RNC 3-2 and most likely to be added to the active set of the MS 1.

The first RNC 3-1 comprises a transceiver 10 arranged for transmitting the load information message to the second RNC 3-2 in response to the receipt of the load request from the second RNC 3-2.

The load information message contains load parameters of one (or more) of the radio cells served by the first RNC 3-1. Such load parameters may comprise a transmission power level and a received interference level obtained from the BS 2-1 connected to the first RNC 3-1. Moreover, the load parameters may comprise a maximum transmission power and a maximum acceptable reception interference level used to determine the load status of the corresponding radio cell 13.

Alternatively, the maximum transmission power and the maximum acceptable reception interference level might be stored in each RNC such that it does not have to be included in the load information message.

The first RNC 3-1 comprises a determination means 11 which could be a CPU or the like and which determines a load level of the controlled radio cell 13 based on an information received from the corresponding BS 2-1, and generates the load information message to be supplied to the transceiver 10. Subsequently, the determination means 11 controls the transceiver 10 so as to transmit the load information message via the MSC 5 to the second RNC 3-2.

Furthermore, the first RNC 3-1 may transmit the load information message concerning its controlled radio cell 13 to the second RNC 3-2 without any load request from the second RNC 3-2. This could be the case, if the cell served by the first RNC 3-2 is in congestion and cannot accept any new branch. Then, the second RNC 3-2 may transmit a command to an MS having this radio cell 13 on its active or candidate set to replace or delete that branch.

The load information about the load of the radio cell 13 controlled by the first RNC 3-1 is supplied to a decision means 21 of the second RNC 3-2. The decision means 21 may be a CPU or the like, and uses the received load information for making a decision as to the admission or deletion of the corresponding radio cell 13 in the active set of the MS 1 controlled by the second RNC 3-2.

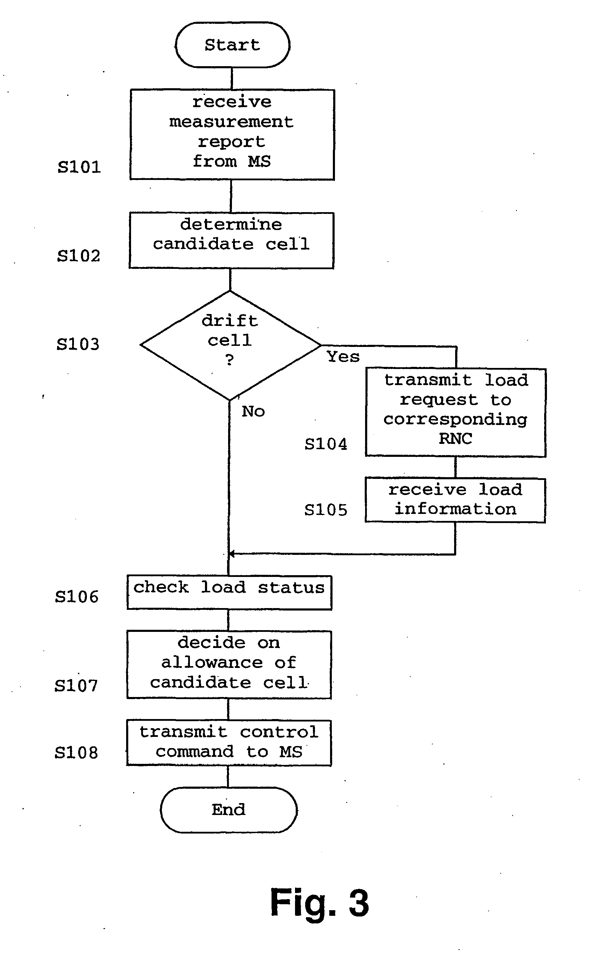

Fig. 3 shows a cell load control procedure performed in the second RNC 3-2, according to the embodiment of the present invention.

According to Fig. 3, the second RNC 3-2 receives a measurement report from the MS 1 via the transceiver 22 (step S101). The received measurement report is supplied to the decision means 21 which determines a candidate cell which might be added to the active set of the MS 1, on the basis of the measurement report (step S102).

Thereafter, the decision means 21 checks whether or not the determined candidate cell is a drift cell (step S103), i. e. a radio cell not served by the second RNC 3-2.

In case the determined candidate cell is not a drift cell, the procedure is continued at step S106, since the load information of the candidate cell is already available at the second RNC 3-2.

In case the determined candidate cell is a drift cell, the decision means 21 controls the transceiver 22 so as to transmit a load request message via the MSC 5 to the transceiver 10 of the first RNC 3-1 (step S104). Then, the second RNC 3-2 waits for the receipt of the load information of the drift cell from the first RNC 3-1.

After the receipt of the load information, the procedure continues at step S106. In step S106, the load status of the candidate cell is checked in the decision means 21.

Based on the load status of the candidate cell, the allowance of the candidate cell to be added to the active set of the MS 1 is decided by the decision means 21 (step S107).

Finally, a control command is generated by the decision means 21 based on the decision result and the decision means 21 subsequently controls the transceiver 22 to transmit the control command to the MS 1 (step S108). The control command is a command for the admission or deletion of the candidate cell in the active set of the MS 1.

In addition to the above procedure according to Fig. 3, a control procedure may be provided so as to transmit a control command to the MS 1 to replace or delete a specific branch from the active set, in case a load information indicating a predetermined load threshold or congestion of the branch has been received from the first RNC 3-1 or another RNC without a corresponding request from the second RNC 3-2. Moreover, a dedicated signaling from the DRNC serving a drift cell may be performed to thereby request a removal or modification of branches for load reasons.

However, the cell load control method and system according to the present invention may as well be applied to the following other radio resource allocation cases which differ from the above described handover case.

For example, in case of packet scheduling, an uplink and/or downlink capacity is allocated for a short time period to an NRT (Non-Real Time) data transmission. Therefore, the second RNC 3-2, i. e. the SRNC, needs to know whether and how much capacity can be provided by a drift cell. This load information can be transmitted in the above described manner from the first RNC 3-1 to the second RNC 3-2 which subsequently decides on the load status of the drift cell 13 and allocates the provided capacity to a requesting user, i. e. a user having transmission data in a corresponding buffer. Thus, the difference with respect to the above handover case lies in the additional determination of the capacity amount to be allocated to the requesting user.

An additional example is a common channel (CCH) load control. In this case, the second RNC 3-2 needs to know the load of a common channel, i. e Random Access channel RACH, Fast Associated channel FACH or Downlink shared channel DSCH, in the drift cell 13, in order to determine when to order the MS 1 to switch to a dedicated channel (DCH) state due to a load status indicating an overload of the respective common channels.

It is to be pointed out that the cell load control method and system described in the embodiment can be applied in any WCDMA radio access network and basically in all radio networks using diversity connections between base stations controlled by different controllers. The above description of the embodiment and the accompanying drawings are only intended to illustrate the present invention. Embodiments of the invention may thus vary within the scope of the attached claims.

In summary, methods and radio access network controllers for performing cell load control in a mobile radio network using diversity connections between base stations are described, wherein the efficiency of the resource management in the radio network is improved by transmitting an external message containing a load information of a cell to a radio network controller not serving this cell. The transmission may be performed in response to a corresponding request transmitted by the radio network controller to another radio network controller which serves the corresponding radio cell. When the radio network controller has received the load information of the cell controlled by the other radio network controller, it may use the load information for deciding on a load status of the radio cell. Thereby, the resource management of radio network is more efficient and the load is maintained balanced among different cells, wherein a possible situation of cell congestion and high interference is avoided.

Moreover, the active set management efficiency is improved, resulting in a higher connection quality, since the decision algorithm to change the active set is faster and more efficient.

An embodiment provides a method for performing cell load control in a mobile radio network using diversity connections between base stations, comprising the steps of a) transmitting a load information of a radio cell from a first radio network controller serving said radio cell to a second radio network controller not serving said radio cell; and b) using said load information in said second radio network controller for deciding on a load status of said radio cell. In this method, said load status may e.g. be used for deciding on an admission of said radio cell for handover of a mobile terminal controlled by the second radio network controller.

The load information may e.g. be transmitted in response to a load request issued by said second radio network controller. The load information may e.g. be transmitted when a load level of said radio cell has reached a predetermined load threshold. The second radio network controller may e.g. command a controlled mobile terminal to replace or delete a branch to said second cell, in response to said load information.

The load request may e.g. be issued on the basis of a measurement of a neighbor cell supported by said mobile terminal. The load request may e.g. be issued, when said radio cell is included in an active set or a candidate set of said mobile terminal, said active set or candidate set being used for determining radio cells for the handover of said mobile terminal. The load request may e.g. be issued, when said mobile terminal has transmitted a request to said second radio network controller to add said radio cell to said active set.

The admission decision may e.g. be directed to an admission or deletion of said radio cell in the active set of said mobile terminal. A periodical load information may e.g. be transmitted in response to said load request.

The radio cell may e.g. be located adjacent to an area served by said second network controller.

The load information may e.g. include a transmission power level and a received interference level of said radio cell.

The mobile radio network may e.g. be a radio access network of the UMTS.

The load status may e.g. used for deciding on an amount of capacity which can be allocated to a user.

The load status may e.g. be used for deciding when to order a mobile terminal to switch to a dedicated channel state.

The mobile terminal may e.g. be ordered to switch to said dedicated channel, when said load status indicates an overload of a common channel.

In accordance with one or more embodiments of the invention, a system may e.g. be provided for performing cell load control in a mobile radio network using diversity connections between base stations, comprising: a) a first radio network controller comprising transmitting means arranged for transmitting a load information of a radio cell served by said first radio network controller to a second radio network controller not serving said radio cell; and b) said second radio network controller comprising a receiving means arranged for receiving said load information, and a decision means arranged for deciding on a load status of said radio cell.

In the system, the load status may e.g. be used for deciding on an admission of said radio cell for a handover of a mobile terminal controlled by said second radio network controller.

The first radio network controller may e.g. comprise a determination means for determining a load level of said radio cell and for generating said load information.

The determination means may e.g. control said transmitting means so as to transmit said load information, when the load level of said radio cell has reached a predetermined load threshold.

The first radio network controller may e.g. comprise a receiving means for receiving a load request transmitted by a transmitting means of said second radio network controller, wherein said determination means may e.g. be arranged to control said transmitting means of said first radio network controller to transmit said load information when said load request has been received by said receiving means.

The determination means may e.g. be arranged to periodically determine said load information and to control said transmitting means of said first radio network controller to periodically transmit said load information. The determination means may e.g. be arranged to determine said load information on the basis of a load parameter received by said first radio network controller from a base station of said radio cell.

The mobile radio network may e.g. be a radio access network of the UMTS.

The load status may e.g. be used for deciding on an amount of capacity which can be allocated to a user.

The load status may e.g. be used for deciding when to order a mobile terminal controlled by said second radio network controller to switch to a dedicated channel state. The mobile terminal may e.g. be ordered to switch to said dedicated channel, when said load status indicates an overload of a common channel.

In accordance with one or more embodiments of the invention, a radio network controller may e.g. be used as said first or second radio network controller in a system described above.

## Claims

1. A method, comprising:
a radio access network controller (3-2) of a mobile radio network issuing a load request to a radio access network controlling device (3-1) serving a radio cell (13), the
radio access network controller (3-2) issuing the load request not serving said radio cell (13);
the radio access network controller .(3-2) receiving a load information of the radio cell (13), in response to the issued load request;
wherein said load information includes at least one of a transmission power level and a received interference level of said radio cell (13); and
the radio access network controller (3-2) using the received load information for deciding on a load status of said radio cell (13).

2. A method according to claim 1, wherein said load status is used for deciding on an admission of said radio cell (13) for handover of a mobile terminal (1) controlled by the radio access network controller (3-2).

3. A method according to any one of claims 1 and 2, wherein said load information is transmitted, when a load level of said radio cell (13) has reached a predetermined load threshold.

4. A method according to claim 3, wherein said radio access network controller (3-2) commands a controlled mobile terminal (1) to replace or delete a branch to said radio cell, in response to said load information.

5. A method according to any one of the preceding claims, wherein said load request is issued on the basis of a measurement of a neighbor cell supported by said mobile terminal (1).

6. A method according to any one of the preceding claims, wherein said load request is issued, when said radio cell is included in an active set or a candidate set of said mobile terminal (1), said active set or candidate set being used for determining radio cells for the handover of said mobile terminal (1).

7. A method according to claim 6, wherein said radio access network controller (3-2) issues the load request in response to receiving, from said mobile terminal (1), a request to add said radio cell (13) to said active set.

8. A method according to claim 6 or 7, wherein an admission decision is directed to an admission or deletion of said radio cell (13) in the active set of said mobile terminal (1).

9. A method according to any one of the preceding claims, wherein a periodical load information is transmitted in response to said load request.

10. A method according to any one of the preceding claims, wherein the radio access network controller (3-2) serves an area which is located adjacent to said radio cell (13).

11. A method according to any one of the preceding claims, wherein said mobile radio network is a radio access network of universal mobile telecommunications system, UMTS.

12. A method according to any one of the preceding claims, wherein said load status is used for deciding on an amount of capacity which can be allocated to a user.

13. A method according to any one of the preceding claims, wherein said load status is used for deciding when to order a mobile terminal (1) to switch to a dedicated channel state.

14. A method according to claim 13, wherein said mobile terminal (1) is ordered to switch to said dedicated channel, when said load status indicates an overload of a common channel.

15. A method according to any one of the preceding claims, comprising
receiving a measurement report from a user equipment, determining a candidate cell based on the measurement report,
responsive to this candidate cell being managed by another radio network controller, request load information of the candidate cell from said another radio network controller, receiving the load information,
based on received load information, deciding if it is allowed to include the candidate cell to the active set,
and
transmitting a control command to the user equipment.

16. A radio access network controller of a mobile radio network, the radio access network controller (3-2) being configured to issue a load request to a radio access network controlling device (3-1) configured to serve a radio cell (13);
the radio access network controller (3-2) being configured to receive a load information of the radio cell (13) from the radio access network controlling device (3-1) in response to the issued load request, said load information including at least one of a transmission power level and a received interference level of said radio cell (13); and the radio access network controller (3-2) being configured to use the received load information for deciding on a load status of said radio cell (13).

17. The radio access network controller of claim 16, configured for use in a system for performing cell load control in a mobile radio network using diversity connections between base stations (2-1, 2-2)

18. The radio access network controller of claim 16 or 17, comprising a receiving means (20) arranged for receiving said load information, and a decision means (21) arranged for deciding on a load status of said radio cell (13).

19. A radio access network controller according to any one of claims 16 to 18, being configured to use said load status for deciding on an admission of said radio cell (13) for a handover of a mobile terminal (1) controlled by said radio network controller (3-2).

20. A radio access network controller according to any one of claims 16 to 19, wherein said radio access network controller (3-2) is a radio access network controller of universal mobile telecommunications system, UMTS.

21. A radio access network controller according to any one of claims 16 to 20, configured to use said load status for deciding on an amount of capacity which can be allocated to a user.

22. A radio access network controller according to any one of claims 16 to 21, configured to use said load status for deciding when to command a mobile terminal (1) controlled by said radio access network controller (3-2) to switch to a dedicated channel state.

23. A radio access network controller according to claim 22, configured to command said mobile terminal (1) to switch to said dedicated channel, when said load status indicates an overload of a common channel.

24. A radio access network controller according to any one of claims 16 to 23, configured
to receive a measurement report from a user equipment,
to determine a candidate cell based on the measurement report,
responsive to this candidate cell being managed by another radio network controller, to request load information of the candidate cell from said another radio network controller,
to receive the load information,
based on the received load information, decide if it is allowed to include the candidate cell to the active set, and
to transmit a control command to the user equipment.

## Patentansprüche

1. Verfahren, mit:
Ausgeben einer Lastanfrage an ein eine Funkzelle (13) versorgendes Funkzugangsnetzwerksteuerungsgerät (3-1) durch eine Funkzugangsnetzwerksteuerung (3-2) eines mobilen Funknetzwerkes, wobei die die Lastanfrage ausgebende Funkzugangsnetzwerksteuerung (3-2) die Funkzelle (13) nicht versorgt;
Empfangen einer Lastinformation der Funkzelle (13) durch die Funkzugangsnetzwerksteuerung (3-2) im Ansprechen auf die ausgegebene Lastanfrage;
wobei die Lastinformation zumindest eines umfasst aus einem Übertragungsleistungspegel und einem empfangenen Interferenzpegel der Funkzelle (13); und
Verwenden der empfangenen Lastinformation durch die Funkzugangsnetzwerksteuerung (3-2), um über einen Lastzustand der Funkzelle (13) zu entscheiden.

2. Verfahren gemäß Anspruch 1, wobei der Lastzustand verwendet wird, um über eine Zulassung der Funkzelle (13) zur Übergabe eines durch die Funkzugangsnetzwerksteuerung (3-2) gesteuerten mobilen Endgerätes (1) zu entscheiden.

3. Verfahren gemäß einem der Ansprüche 1 und 2, wobei die Lastinformation übertragen wird, wenn ein Lastpegel der Funkzelle (13) einen vorbestimmten Lastschwellwert erreicht hat.

4. Verfahren gemäß Anspruch 3, wobei die Funkzugangsnetzwerksteuerung (3-2) ein gesteuertes mobiles Endgerät (1) im Ansprechen auf die Lastinformation anweist, eine Abzweigung zu der Funkzelle zu ersetzen oder zu löschen.

5. Verfahren gemäß einem der vorhergehenden Ansprüche, wobei die Lastanfrage auf der Grundlage einer Messung einer durch das mobile Endgerät (1) unterstützten Nachbarzelle ausgegeben wird.

6. Verfahren gemäß einem der vorhergehenden Ansprüche, wobei die Lastanfrage ausgegeben wird, wenn die Funkzelle von einer aktiven Menge oder einer Kandidatenmenge des mobilen Endgerätes (1) umfasst ist, wobei die aktive Menge oder die Kandidatenmenge verwendet wird, um Funkzellen für die Übergabe des mobilen Endgerätes (1) zu bestimmen.

7. Verfahren gemäß Anspruch 6, wobei die Funkzugangsnetzwerksteuerung (3-2) die Lastanfrage ausgibt im Ansprechen auf ein Empfangen einer Anfrage von dem mobilen Endgerät (1), die Funkzelle (13) zu der aktiven Menge hinzuzufügen.

8. Verfahren gemäß Anspruch 6 oder 7, wobei eine Zulassungsentscheidung auf eine Zulassung oder eine Löschung der Funkzelle (13) in der aktiven Menge des mobilen Endgeräts (1) gerichtet ist.

9. Verfahren gemäß einem der vorhergehenden Ansprüche, wobei eine periodische Lastinformation im Ansprechen auf die Lastanfrage übertragen wird.

10. Verfahren gemäß einem der vorhergehenden Ansprüche, wobei die Funkzugangsnetzwerksteuerung (3-2) einen Bereich versorgt, welcher an die Funkzelle (13) angrenzend angeordnet ist.

11. Verfahren gemäß einem der vorhergehenden Ansprüche, wobei das mobile Funknetzwerk ein Funkzugangsnetzwerk des UMTS-Systems ist.

12. Verfahren gemäß einem der vorhergehenden Ansprüche, wobei der Lastzustand verwendet wird, um über einen Betrag einer Kapazität, die einem Nutzer zugewiesen werden kann, zu entscheiden.

13. Verfahren gemäß einem der vorhergehenden Ansprüche, wobei der Lastzustand verwendet wird, um zu entscheiden, wann ein mobiles Endgerät (1) angewiesen werden soll in einen dedizierten Kanalzustand umzuschalten.

14. Verfahren gemäß Anspruch 13, wobei das mobile Endgerät (1) angewiesen wird auf den dedizierten Kanal umzuschalten, wenn der Lastzustand eine Überlastung eines gemeinsamen Kanals anzeigt.

15. Verfahren gemäß einem der vorhergehenden Ansprüche, mit:
Empfangen eines Messberichtes von einer Nutzerausrüstung,
Bestimmen einer Kandidatenzelle basierend auf dem Messbericht,
im Ansprechen darauf, dass diese Kandidatenzelle durch eine weitere Funknetzwerksteuerung verwaltet wird, Anfragen von Lastinformation der Kandidatenzelle von der weiteren Funknetzwerksteuerung,
Empfangen der Lastinformation,
Entscheiden, ob es basierend auf der empfangenen Lastinformation erlaubt ist, die Kandidatenzelle in die aktive Menge einzuschließen, und
Übertragen einer Steuerungsanweisung an die Nutzerausrüstung.

16. Funkzugangsnetzwerksteuerung eines mobilen Funknetzwerks, wobei die Funkzugangsnetzwerksteuerung (3-2) dazu eingerichtet ist, um eine Lastanfrage an ein Funkzugangsnetzwerksteuerungsgerät (3-1) auszugeben, das eingerichtet ist, um eine Funkzelle (13) zu versorgen;
wobei die Funkzugangsnetzwerksteuerung (3-2) dazu eingerichtet ist, um eine Lastinformation der Funkzelle (13) von dem Funkzugangsnetzwerksteuerungsgerät (3-1) im Ansprechen auf die ausgegebene Lastanfrage zu empfangen, wobei die Lastinformation zumindest eines umfasst aus einem Übertragungsleistungspegel und einem empfangenen Interferenzpegel der Funkzelle (13); und
wobei die Funkzugangsnetzwerksteuerung (3-2) dazu eingerichtet ist, um die empfangene Lastinformation zu verwenden, um über einen Lastzustand der Funkzelle (13) zu entscheiden.

17. Funkzugangsnetzwerksteuerung gemäß Anspruch 16, die eingerichtet ist, um in einem System zur Durchführung von Zelllaststeuerung in einem mobilen Funknetzwerk verwendet zu werden, das Diversitätsverbindungen zwischen Basisstationen (2-1, 2-2) verwendet.

18. Funkzugangsnetzwerksteuerung gemäß Anspruch 16 oder 17, mit einer Empfangseinrichtung (20), die dazu angeordnet ist, um die Lastinformation zu empfangen, und einer Entscheidungseinrichtung (21), die dazu angeordnet ist, um über einen Lastzustand der Funkzelle (13) zu entscheiden.

19. Funkzugangsnetzwerksteuerung gemäß einem der Ansprüche 16 bis 18, die dazu eingerichtet ist, um den Lastzustand zur Entscheidung zu verwenden, über eine Zulassung der Funkzelle (13) für eine Übergabe eines mobilen Endgerätes (1), das durch die Funknetzwerksteuerung (3-2) gesteuert wird.

20. Funkzugangsnetzwerksteuerung gemäß einem der Ansprüche 16 bis 19, wobei die Funkzugangsnetzwerksteuerung (3-2) eine Funkzugangsnetzwerksteuerung des UMTS-Systems ist.

21. Funkzugangsnetzwerksteuerung gemäß einem der Ansprüche 16 bis 20, die dazu eingerichtet ist, um den Lastzustand zur Entscheidung zu verwenden, über einen Betrag einer Kapazität, die einem Nutzer zugewiesen werden kann.

22. Funkzugangsnetzwerksteuerung gemäß einem der Ansprüche 16 bis 21, die dazu eingerichtet ist, um den Lastzustand zur Entscheidung darüber zu verwenden, wann ein durch die Funkzugangsnetzwerksteuerung (3-2) gesteuertes mobiles Endgerät (1) anzuweisen ist in einen dedizierten Kanalzustand umzuschalten.

23. Funkzugangsnetzwerksteuerung gemäß Anspruch 22, die dazu eingerichtet ist, um das mobile Endgerät (1) anzuweisen auf den dedizierten Kanal umzuschalten, wenn der Lastzustand eine Überlastung eines gemeinsamen Kanals anzeigt.

24. Funkzugangsnetzwerksteuerung gemäß einem der Ansprüche 16 bis 23, die dazu eingerichtet ist,
um von einer Nutzerausrüstung einen Messbericht zu empfangen,
um basierend auf dem Messbericht eine Kandidatenzelle zu bestimmen,
um, im Ansprechen darauf, dass diese Kandidatenzelle durch eine weitere Funknetzwerksteuerung verwaltet wird, Lastinformation der Kandidatenzelle von dem weiteren Funknetzwerksteuerung anzufragen,
um die Lastinformation zu empfangen,
um zu entscheiden, ob es basierend auf der empfangenen Lastinformation erlaubt ist, die Kandidatenzelle in die aktive Menge einzuschließen, und
um eine Steuerungsanweisung an die Nutzerausrüstung zu übertragen.

## Revendications

1. Procédé, comprenant :
un contrôleur de réseau d'accès radio (3-2) d'un réseau radio mobile émettant une demande de charge à un dispositif de commande de réseau d'accès radio (3-1) desservant une cellule radio (13), le contrôleur de réseau d'accès radio (3-2) émettant la demande de charge ne desservant pas ladite cellule radio (13) ;
le contrôleur de réseau d'accès radio (3-2) recevant une information de charge de la cellule radio (13) en réponse à la demande de charge émise ;
dans lequel ladite information de charge comprend au moins l'un d'un niveau de puissance de transmission et d'un niveau d'interférence reçue de ladite cellule radio (13) ; et
le contrôleur de réseau d'accès radio (3-2) utilisant l'information de charge reçue pour décider d'un statut de charge de ladite cellule radio (13).

2. Procédé selon la revendication 1, dans lequel ledit statut de charge est utilisé pour décider d'une admission de ladite cellule radio (13) pour le transfert d'un terminal mobile (1) commandé par le contrôleur de réseau d'accès radio (3-2).

3. Procédé selon l'une quelconque des revendications 1 et 2, dans lequel ladite information de charge est transmise, lorsqu'un niveau de charge de ladite cellule radio (13) a atteint un seuil de charge prédéterminé.

4. Procédé selon la revendication 3, dans lequel ledit contrôleur de réseau d'accès radio (3-2) ordonne à un terminal mobile commandé (1) de remplacer ou supprimer une branche de ladite cellule radio en réponse à ladite information de charge.

5. Procédé selon l'une quelconque des revendications précédentes, dans lequel ladite demande de charge est émise sur la base d'une mesure d'une cellule voisine supportée par ledit terminal mobile (1).

6. Procédé selon l'une quelconque des revendications précédentes, dans lequel ladite demande de charge est émise, lorsque ladite cellule radio est incluse dans un ensemble actif ou un ensemble candidat dudit terminal mobile (1), ledit ensemble actif ou ledit ensemble candidat étant utilisé pour déterminer des cellules radio pour le transfert dudit terminal mobile (1).

7. Procédé selon la revendication 6, dans lequel ledit contrôleur de réseau d'accès radio (3-2) émet la demande de charge en réponse à la réception, dudit terminal mobile (1), d'une demande d'ajout de ladite cellule radio (13) au dit ensemble actif.

8. Procédé selon la revendication 6 ou 7, dans lequel une décision d'admission porte sur une émission ou une suppression de ladite cellule radio (13) dans l'ensemble actif dudit terminal mobile (1).

9. Procédé selon l'une quelconque des revendications précédentes, dans lequel une information de charge périodique est transmise en réponse à ladite demande de charge.

10. Procédé selon l'une quelconque des revendications précédentes, dans lequel le contrôleur de réseau d'accès radio (3-2) dessert une zone adjacente à ladite cellule radio (13).

11. Procédé selon l'une quelconque des revendications précédentes, dans lequel ledit réseau radio mobile est un réseau d'accès radio du système universel de télécommunications mobiles, UMTS.

12. Procédé selon l'une quelconque des revendications précédentes, dans lequel ledit statut de charge est utilisé pour décider d'une quantité de capacité pouvant être allouée à un utilisateur.

13. Procédé selon l'une quelconque des revendications précédentes, dans lequel ledit statut de charge est utilisé pour décider quand ordonner à un terminal mobile (1) de passer dans un état de canal dédié.

14. Procédé selon la revendication 13, dans lequel il est ordonné au dit terminal mobile (1) de passer sur ledit canal dédié, lorsque ledit statut de charge indique une surcharge d'un canal commun.

15. Procédé selon l'une quelconque des revendications précédentes, comprenant
la réception d'un rapport de mesure d'un équipement d'utilisateur,
la détermination d'une cellule candidate sur la base du rapport de mesure,
en réponse à cette cellule candidate étant gérée par un autre contrôleur de réseau radio, la demande d'une information de charge de la cellule candidate à l'autre dit contrôleur de réseau radio,
la réception de l'information de charge,
sur la base de l'information de charge reçue, la décision d'inclure ou pas la cellule candidate dans l'ensemble actif, et
la transmission d'une commande de contrôle à l'équipement d'utilisateur.

16. Contrôleur de réseau d'accès radio d'un réseau radio mobile, le contrôleur de réseau d'accès radio (3-2) étant configuré pour émettre une demande de charge à un dispositif de commande de réseau d'accès radio (3-1) configuré pour desservir une cellule radio (13) ;
le contrôleur de réseau d'accès radio (3-2) étant configuré pour recevoir une information de charge de la cellule radio (13) du dispositif de commande de réseau d'accès radio (3-1) en réponse à la demande de charge émise, ladite information de charge comprenant au moins l'un d'un niveau de puissance de transmission et d'un niveau d'interférence reçue de ladite cellule radio (13) ; et
le contrôleur de réseau d'accès radio (3-2) étant configuré pour utiliser l'information de charge reçue pour décider d'un statut de charge de ladite cellule radio (13).

17. Contrôleur de réseau d'accès radio selon la revendication 16, configuré pour un usage dans un système pour effectuer un contrôle de charge de cellule dans un réseau radio mobile en utilisant une diversité de connexions entre des stations de base (2-1, 2-2).

18. Contrôleur de réseau d'accès radio selon la revendication 16 ou 17, comprenant un moyen de réception (20) agencé pour recevoir ladite information de charge, et un moyen de décision (21) agencé pour décider d'un statut de charge de ladite cellule radio (13).

19. Contrôleur de réseau d'accès radio selon l'une quelconque des revendications 16 à 18, étant configuré pour utiliser ledit statut de charge pour décider d'une admission de ladite cellule radio (13) pour un transfert d'un terminal mobile (1) commandé par ledit contrôleur de réseau d'accès radio (3-2).

20. Contrôleur de réseau d'accès radio selon l'une quelconque des revendications 16 à 19, dans lequel ledit contrôleur de réseau d'accès radio (3-2) est un contrôleur de réseau d'accès radio du système universel de télécommunications mobiles, UMTS.

21. Contrôleur de réseau d'accès radio selon l'une quelconque des revendications 16 à 20, configuré pour utiliser ledit statut de charge pour décider d'une quantité de capacité pouvant être allouée à un utilisateur.

22. Contrôleur de réseau d'accès radio selon l'une quelconque des revendications 16 à 21, configuré pour utiliser ledit statut de charge pour décider quand ordonner à un terminal mobile (1) commandé par ledit contrôleur de réseau d'accès radio (3-2) de passer dans un état de canal dédié.

23. Contrôleur de réseau d'accès radio selon la revendication 22, configuré pour ordonner au dit terminal mobile (1) de passer sur ledit canal dédié, lorsque ledit statut de charge indique une surcharge d'un canal commun.

24. Contrôleur de réseau d'accès radio selon l'une quelconque des revendications 16 à 23, configuré pour
recevoir un rapport de mesure d'un équipement d'utilisateur, déterminer une cellule candidate sur la base du rapport de mesure,
en réponse à cette cellule candidate qui est gérée par un autre contrôleur de réseau radio, demander à l'autre dit contrôleur de réseau radio une information de charge de la cellule candidate,
recevoir l'information de charge,
sur la base de l'information de charge reçue, décider d'inclure ou pas la cellule candidate dans l'ensemble actif, et
transmettre une commande de contrôle à l'équipement d'utilisateur.
